# EUROPEAN PATENT SPECIFICATION

(11) **EP 3 273 091 B1**
(45) Date of publication and mention of the grant of the patent: **25.06.2025**
(21) Application number: 15885051.1
(22) Date of filing: 25.03.2015
(51) Int. Cl.: F16F 1/38, F16F 1/393

(54) **METHOD AND PRODUCT FOR CONICAL SPRING HAVING VARIABLE STIFFNESS AND CAPABLE OF PREVENTING FOLDING AND CRACKING**
VERFAHREN UND PRODUKT FÜR KONISCHE FEDER MIT VERÄNDERLICHER STEIFHEIT UND MIT FÄHIGKEIT ZUR VERHINDERUNG VON FALTUNG UND SPALTUNG
PROCÉDÉ ET PRODUIT POUR UN RESSORT CONIQUE QUI PRÉSENTE UNE RIGIDITÉ VARIABLE ET QUI PEUT EMPÊCHER LE PLIAGE ET LA CASSURE

(30) Priority: 17.03.2015 CN 201510115772
(43) Date of publication of application: 24.01.2018
(73) Proprietor: Zhuzhou Times New Material Technology Co., Ltd., Zhuzhou, Hunan 412007 (CN)
(72) Inventor: TAN, Fang, Zhuzhou Hunan 412007 (CN); DING, Wei, Zhuzhou Hunan 412007 (CN); SUN, Haiyan, Zhuzhou Hunan 412007 (CN); FENG, Wansheng, Zhuzhou Hunan 412007 (CN); LIU, Luyang, Zhuzhou Hunan 412007 (CN)
(74) Representative: Keil & Schaafhausen Patentanwälte PartGmbB
(86) International application number: PCT/CN2015/075053
(87) International publication number: WO 2016/145668

(56) References cited:
- CN-A- 102 401 084
- CN-U- 201 461 844
- CN-U- 204 037 583
- DE-A1- 1 916 404
- DE-A1- 19 702 947
- DE-A1- 19 702 947
- JP-A- 2002 295 584
- JP-B2- 5 069 974

## Description

### Technical Field

The invention relates to improvement of a conical spring used e.g on a locomotive, especially to a method for adjusting stiffness changes of a conical spring according to the preamble of claim 1 and a conical spring according to the preamble of claim 5. The method and the conical spring structure may implement multiple stiffness changes of the conical spring and prevent rubber of the conical spring from folding and cracking due to compression while in use. The invention belongs to the technical field of elastic shock absorption.

### Background

A conical spring, also called journal box spring, mainly refers to a spring with a shock absorption effect formed by combining metal with rubber on a locomotive. The conical spring is installed between a journal box and a frame of a rail locomotive to achieve the effects of support, shock absorption and noise reduction, is a frequently-used shock-absorption and noise-reduction element formed by combining rubber with metal, is installed on a locomotive body of single-stage suspension and two-stage suspension of the locomotive, and is mainly used for bearing the load of the locomotive body and the frame. Formed by vulcanizing a conical metal piece and rubber into a whole through an adhesive at certain temperature and pressure, the conical spring achieves the effects of shock absorption and noise reduction using the vulcanized rubber, and achieves the effects of support and installation interface using the metal piece.

With the development of technique of locomotives, especially the development of technique of high-speed railway motor train units, urban rail trains, metro vehicles and low-floor vehicles, for the conical spring, in order to preferably meet and guarantee the dynamics requirements and safety of locomotives, it is required that the conical spring should have changeable stiffness in vertical stiffness, and the phenomenon of an inverse S curve should not occur to the vertical stiffness. The fact that the inverse S curve occurs to the vertical stiffness is because that a rubber body of the existing conical spring structure has no strong mutual extrusion and has no extrusion of contact between an externally protruded lug boss and rubber, the vertical changeable stiffness of the conical spring is too small under no load, when the locomotive is under load, especially under the maximum vertical load, when it is required that the rubber part of the conical spring should provide sufficiently large vertical stiffness, but the existing conical spring cannot provide large changeable stiffness, so that ideal changeable stiffness cannot be achieved, and thus the stiffness curve presents inverse "S". The conical spring having an inverse "S" curve has large stiffness under no load, so that the risk of derail of the locomotive may be caused. In addition, when the locomotive accelerates, decelerates or makes a turn, it is required that the conical spring has appropriate transverse changeable stiffness and longitudinal changeable stiffness, so that the locomotive more meets dynamics requirements, thereby having good effects of transverse and longitudinal shock absorption and noise reduction. Therefore, by appropriately increasing the number of transverse changeable stiffness and longitudinal changeable stiffness of the locomotive to achieve multiple changes of stiffness, the locomotive may be made to run more steady and smooth. Because the conical spring is a whole formed by vulcanizing metal and rubber, which cannot be disassembled and cannot be conveniently repaired locally, the conical spring is a lifelong maintenance-free product. With the development of technique of locomotives, the fatigue load thereof becomes harsh more and more, and the requirement for fatigue performance becomes strict more and more. For the structure of the current conical spring, while in use, because profiles of rubber of the existing structure are single-structure profiles, "fold" deformation is easy to occur to upper and lower rubber profiles when the product under vertical load, thereby forming stress concentration, and because the vertical load of the product is completely undertaken by rubber, both stress and strain are large, thereby causing rubber to crack due to rubber fatigue finally. Thus, a conical spring capable of adjusting changeable stiffness and capable of preventing folds from occurring while in use is required to meet the above-mentioned requirements.

It is found that the following patent has the similarities to the invention through domestic retrieval:
According to the invention with the application No. "201010285627.8" and the title "journal box for bogie of urban rail train", the invention relates to a journal box spring for a bogie of an urban rail train. An outer ring of a spindle is provided with a spacer sleeve I, a spacer sleeve II and an outer sleeve in sequence from inside to outside. The spindle, the spacer sleeve I, the spacer sleeve II and the outer sleeve are all made of metal materials, and a rubber layer III, a rubber layer II and a rubber layer I are respectively arranged between two adjacent metal materials. The exposed metal surface of each of the spindle, the spacer sleeve I, the spacer sleeve II and the outer sleeve is coated with base paint and surface paint. The invention has the advantage that a journal box spring for a bogie of an urban rail train which has small vertical, transverse and longitudinal static stiffness when train wheels move and can improve the flexibility and quality when the train runs.

Because the invention with the application No. "201010285627.8" has no structure capable of substantially increasing the vertical stiffness of the rubber part of the journal box spring under the maximum vertical load, stiffness is mainly increased by metal components under large vertical load, which may affect the shock absorption effect of the journal box spring.

According to the utility model with the application No. "201420467799.0" and the title "journal box for bogie of overloaded railway wagon", the utility model discloses a journal box spring for a bogie of an overloaded railway wagon. The object of the utility model is to provide a journal box spring for a bogie of an overloaded railway wagon, to overcome the defects of over large radial stiffness, heavy weight and the like of the existing journal box spring. The utility model comprises an outer sleeve, an inner sleeve, an inner core, a first rubber layer and a second rubber layer, and is characterized in that the first rubber layer and the second rubber layer are vulcanized into a whole together with the outer sleeve, the inner sleeve and the inner core, the outer sleeve is connected to the inner core through a copper conducting wire built in the surface of the first rubber layer and the second rubber layer, and the included angle between the side extension of the first rubber layer and the second rubber layer and the top of the plane journal box spring is 100-160°. The utility model mainly relates to a journal box spring used on a bogie of an overloaded railway wagon. However, the patent for utility models does not make the journal box spring implement multiple changeable stiffness structure, so that it is difficult to meet multiple changes of stiffness required by a locomotive in different states.

JP 5069972 discloses a conical spring according to the preamble of claim 5 and a method of changing stiffness and preventing folding and cracking of a conical spring according to the preamble of claim 5. CN 201 461 844 U discloses a further conical spring assembly.

Therefore, so far, there has not been a method and device capable of effectively preventing a rubber body from folding and cracking while preventing a conical spring from changing stiffness and meeting multiple changes of stiffness required by a locomotive in different states, so that there is a need to further improve in this aspect.

### Content of the Invention

The technical problems to be solved by the invention are:
1. When an inverse S curve occurs to the entire vertical changeable stiffness and the locomotive is under no load, if the vertical stiffness of the conical spring is too large, the risk of derail of the locomotive may be caused, thereby failing to achieve the desired effect of shock absorption;
2. When achieving that the locomotive is under the maximum vertical load, the conical spring can still support load by rubber only, to prevent poor effects of shock absorption and noise reduction of the conical spring when the load is supported by metal and rubber together;
3. In the process in which the locomotive bears no load to the maximum vertical load, the shape of the rubber of the conical spring is always a smooth shape without fold, to prevent the rubber part of the conical spring from cracking;
4. When the locomotive accelerates, decelerates or makes a turn, the conical spring may make multiple changes of stiffness, to make the locomotive run more steady and smooth.

In view of the above problems, the invention proposes a technical solution with the features of claim1 and claim 5. A method for changing stiffness and preventing folds and cracks of a conical spring is provided. The conical spring comprises an inner conical body, a rubber body and an outer conical body. The rubber body encircles the periphery of the inner conical body. The outer conical body encircles the periphery of the rubber body. The rubber body, the inner conical body and the outer conical body form a conical rubber metal spring together. The method of the invention has the characteristic that an upper rubber profile of the rubber body and a lower rubber profile of the rubber body of the conical spring adopt a multi-segment structural form, wherein the upper rubber profile of the rubber body is of a multi-section downslope structure, and the lower rubber profile of the rubber body is of a multi-section upslope structure; for the conical spring, the extent of stiffness change and the position of stiffness change of the conical spring are adjusted by adjusting the shape, slope and length of each section in the multi-section downslope structure of the upper rubber profile of the rubber body and the multi-section upslope structure of the lower rubber profile of the rubber body, and the adjustment of multiple stiffness changes is achieved by controlling the number of multiple sections.

Further, in the multi-section downslope structure of the upper rubber profile of the rubber body, the shape of each section is a straight line or arc shape, and every two sections are connected through arc section transition, to guarantee that in the process of downwards moving the upper end of the rubber body, the shape of the upper end of the rubber body is always kept as a smooth shape, so that no fold and crack may be generated.

Further, in the multi-section upslope structure of the lower rubber profile of the rubber body, the shape of each section is a straight line or arc shape, every two sections are connected through arc section transition, to guarantee that in the process of downwards moving the rubber body, the shape of the lower end surface of the rubber body is always kept as a smooth shape, so that no fold and crack may be generated.

Further, a lug boss is externally protruded from the bottom of the inner conical body, and after the rubber body downwards moves to the lower end surface of the rubber body and comes into contact with the lug boss, substantial changeable stiffness is generated by the cooperation of double restriction of the lug boss externally protruded from the bottom of the inner conical body and the inner side of the outer conical body; under the action of vertical load, the lower end surface of the rubber body is simultaneously closely fitted with the inner side of the outer conical body and the externally protruded lug boss of the lower part of the inner conical body gradually in a rolling mode, to achieve substantial changeable stiffness.

According to the invention, the upper surface of the lug boss is of a multi-section structure, every two sections adopt an arc section for transition, the extent of stiffness change and the position of stiffness change are adjusted by adjusting the shape, slope and length of each section of the lug boss and the opening angle of the inner side of the outer conical body, and the adjustment of multiple stiffness changes is achieved by controlling the number of multiple sections.

A conical spring for carrying out the above method for changing stiffness and preventing folding and cracking of the conical spring, which comprises an inner conical body, a rubber body and an outer conical body. The rubber body encircles the periphery of the inner conical body. The outer conical body encircles the periphery of the rubber body. The rubber body, the inner conical body and the outer conical body form a conical rubber metal spring together; the
method of the invention has the characteristic that an upper rubber profile of the rubber body of the conical spring and a lower rubber profile of the rubber body adopt a multi-section structure form, wherein the upper rubber profile of the rubber body is of a multi-section downslope structure form, and the lower rubber profile of the rubber body is of a multi-section upslope structure.

Further, in the multi-section downslope structure of the upper rubber profile of the rubber body, the shape of each section is a straight line or arc shape, every two sections adopt an arc section for transition, to guarantee that in the process of downwards moving the upper end of the rubber body, the shape of the upper end of the rubber body is always kept as a smooth shape, so that no fold and crack may be generated.

Further, in the multi-section upslope structure of the lower rubber profile of the rubber body, the shape of each section is a straight line or arc shape, every two sections adopt an arc section for transition, to guarantee that in the process of downwards moving the rubber body, the shape of the lower end surface of the rubber body is always kept as a smooth shape, so that no fold and crack may be generated.

Further, a lug boss is externally protruded from the bottom of the inner conical body, after the rubber body downwards moves to the lower end surface of the rubber body and comes into contact with the lug boss, substantial changeable stiffness is generated by the cooperation of double restriction of the lug boss externally protruded from the bottom of the inner conical body and the inner side of the outer conical body; under the action of vertical load, the lower end surface of the rubber body is simultaneously closely fitted with the inner side of the outer conical body and the externally protruded lug boss of the lower part of the inner conical body gradually in a rolling mode, to achieve substantial changeable stiffness.

According to the invention, the upper surface of the lug boss is of a multi-section structure, every two sections adopt an arc section for transition, and the extent of stiffness change and the position of stiffness change are adjusted by adjusting the shape, slope and length of each section of the lug boss and the opening angle of the inner side of the outer conical body; and the adjustment of multiple stiffness changes is achieved by controlling the number of multiple sections.

The invention has the following advantages:
1. The upper end surface of the rubber body is of a multi-section combination profile, and every two sections adopt an annular fillet section for transition, so that multiple gentle changes of vertical stiffness may be achieved, the phenomenon that the vertical stiffness of the conical spring is suddenly increased may not occur, and the occurrence of inverse S curve to the vertical stiffness may be avoided, thereby effectively preventing the locomotive from derailing, and meanwhile making the conical spring have good effects of shock absorption and noise reduction.
2. The lower end of the inner conical body extends to the outer side to form an annular inner conical body lug boss, the rubber body downwards moves under large vertical load, at this moment, the lower end of the rubber body is fitted with the inner conical body lug boss, and the vertical stiffness of the rubber body may be substantially increased when the rubber body is under double restriction of the inner conical body lug boss and the inner side of the outer conical body. Thus, support is conducted using the rubber body under large vertical load rather than using the metal and the rubber body together under large vertical load, so that it is achieved that the conical spring may still has good effects of shock absorption and noise reduction under large vertical load.
3.The upper end of the rubber body uses a deformation profile structure of more than two sections, every two sections adopt an annular fillet section for transition, the rubber body may be effectively prevented from bearing load by reasonably adjusting the slope and length of each section, and in the process of downwards moving the upper end of the rubber body, the shape of the upper end of the rubber body is always kept as a smooth shape, thereby preventing the upper end of the rubber body from cracking.
4. The rubber body may downwards move under large vertical load, the lower end of the rubber body is fitted with the inner conical body lug boss at this moment, and because gentle transition is adopted at the inner conical body lug boss, the shape of the lower end of the rubber body is always kept as a smooth shape, thereby preventing the lower end of the rubber body from cracking.
5. Both the upper end and lower end of the rubber body adopt multi-section combination profiles, and every two sections adopt an annular fillet section for transition. Thus, the rubber body may achieve multiple changes of transverse stiffness and longitudinal stiffness and make the changes of transverse stiffness and longitudinal stiffness be gentle, so that the phenomenon that the transverse stiffness and longitudinal stiffness are suddenly increased may not occur. Thus, the locomotive is more steady and smooth while the locomotive accelerates, decelerates or makes a turn, thereby increasing the comfortableness of passengers in the locomotive.
6. For the conical spring, by changing the length and slope of each section and the number of sections, the vertical changeable stiffness, transvers changeable stiffness and longitudinal changeable stiffness of the conical spring are adjusted, so that the conical spring can meet the requirements of the locomotive for stiffness in different states, and thus, the locomotive preferably meets dynamics requirements, thereby making the locomotive preferably run. Meanwhile, the conical spring is stronger in generality, is wider in application range, and may be applied to various locomotives.
7. The conical spring may prevent cracks, is long in service life, is simple in structure, is low in cost, and is suitable for batch production.

### Description of the Drawings

Figure 1 is a sectional view of the invention;
Figure 2 is an enlarged view at A in Figure 1;
Figure 3 is an enlarged view at B in Figure 1;
Figure 4 is one stereographic schematic diagram of the invention;
Figure 5 is another stereographic schematic diagram of the invention;
Figure 6 is a sectional view of the invention under maximum vertical load;
Figure 7 is an enlarged view at C in Figure 6;
Figure 8 is an enlarged view at D in Figure 6;
Figure 9 is a vertical stiffness curve of the invention;
Figure 10 is a sectional view of the invention before improvement;
Figure 11 is a sectional view of the invention before improvement under maximum vertical load; and
Figure 12 is a vertical stiffness curve of the invention before improvement.

Legends: 1. inner conical body; 11. inner conical body lug boss; 111. lug boss transition edge; 2. rubber body; 21. annular straight section; 211. first annular straight section; 212. second annular straight section; 213. third annular straight section; 214. fourth annular straight section; 215. fifth annular straight section; 22. annular fillet section; 3. outer conical body.

### Detailed Description

The invention will be further described as below with reference to embodiments and the drawings.

### Embodiment 1

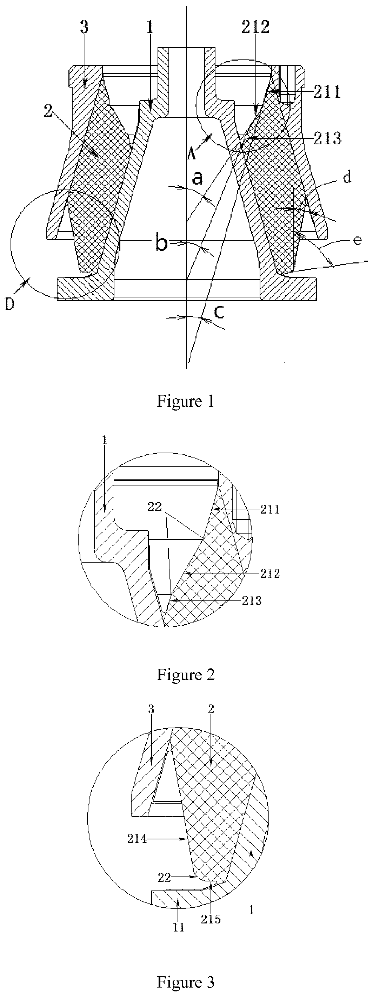

As shown in Figure 1 to Figure 5, a conical spring, comprising an inner conical body 1, a rubber body 2 and an outer conical body 3, wherein the lower end of the inner conical body 1 extends to the outer side to form an annular inner conical body lug boss 11. As shown in Figure 1 and Figure 2, the upper end surface of the rubber body 2 is of a multi-section downslope structure of three sections which are a first annular straight section 211, a second annular straight section 212 and a third annular straight section 213 respectively, and every two annular straight sections adopt the annular fillet section 22 for transition. The so-called multi-section downslope structure is a gradually descending trend of the rubber body 2 from the joint with the outer conical body 3 to the inner conical body 1 of the rubber body 2. As shown in Figure 1 and Figure 3, the lower end surface of the rubber body 2 is of a multi-section upslope structure of two sections which are a fourth annular straight section 214 and a fifth annular straight section 215 respectively, and the fourth annular straight section 214 and the fifth annular straight section 215 also adopt the annular fillet section 22 for transition. The so-called multi-section upslope structure is a gradually ascending trend of the rubber body 2 from the joint with the inner conical body 1 to the outer conical body 3 of the rubber body 2. In this embodiment, the fillet radius of the annular fillet section 22 of the lower end surface of the rubber body 2 is 15-25 mm, and fillet radii of the two annular fillet sections 22 of the upper end of the rubber body 2 are both 4-8 mm. The rubber body 2 encircles the periphery of the inner conical body 1, and the outer conical body 3 encircles the periphery of the rubber body 2. The inner conical body 1 and the outer conical body 3 are metal components, the inner conical body 1 and the outer conical body 3, and the rubber body 2 are vulcanized into a whole through an adhesive at certain temperature and pressure. The effects thereof are: the rubber body achieves the effects of shock absorption and noise reduction, and the inner conical body 1 and the outer conical body 3 achieve the effects of support and installation interface.

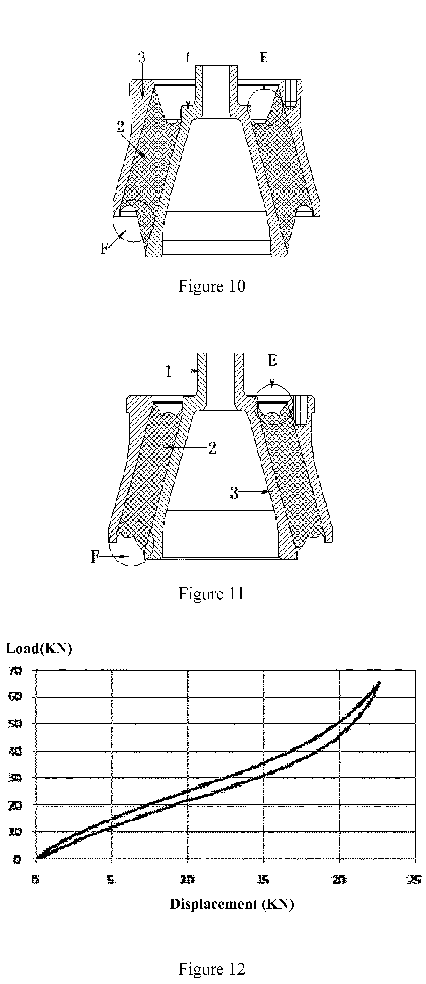

As shown at E and F in Figure 10, in the current conical spring, both the upper end and the lower end of the rubber body 2 adopt a shape of combining a straight section with an arc section. In such structure, when the rubber body 2 bears the maximum vertical load, corresponding folds at E and F in Figure 11 may occur to the upper end surface and the lower end surface of the rubber body 2, which will cause cracks of the rubber body 2 over time; because the conical spring is a whole formed by vulcanizing metal and rubber, which cannot be disassembled and cannot be conveniently repaired locally, the conical spring is a lifelong maintenance-free product, so that the conical spring is replaced if the rubber body 2 cracks.

To prevent the upper end of the rubber body 2 from folding, the structure used in this embodiment is as shown in Figure 1 and Figure 2. The upper end of the rubber body 2 is formed into a whole by the first annular straight section 211, the second annular straight section 212, the third annular straight section 213 and two annular fillet sections 22. The first annular straight section 211 and the second annular straight section 212 adopt the annular fillet sections 22 for transition, and the second annular straight section 212 and the third annular straight section 213 also adopt the annular fillet sections 22 for transition. In the process of downwards moving the rubber body 2 when being subjected to vertical load, because the outer side of the rubber body 2 is connected to the inner side of the outer conical body 3, the movement of the upper end and outer side of the rubber body 2 may be restricted by the outer conical body 3. Thus, in the process of downwards moving the rubber body 2 when being subjected to vertical load, the change of the shape of the upper end of the rubber body 2 may be affected by multiple factors such as the slope and length of each annular straight section 21, inside slope of the outer conical body 3 and the like.

For example, any one of the first annular straight section 211 and the second annular straight section is inwards tilted rather than outwards tilted as in Figure 1. Alternatively, if the length of any one of the first annular straight section 211, the second annular straight section 212 and the third annular straight section 213 is too large, the shape of the upper end of the rubber body 2 may present a fold similar to that at E in Figure 11 in the process of downwards moving the rubber body 2. As shown in the following Table, the Table shows the included angle between each annular straight section of the rubber body 2 in this embodiment and the vertical direction and the length of each annular straight section.

| | Included angle (degree) between annular straight section and vertical direction | Length (mm) of annular straight section |
|---|---|---|
| First annular straight section | 14-17 (a in Figure 1) | 18-22 |
| Second annular straight section | 44-47(b in Figure 1) | 20-23 |
| Third annular straight section | 14-16 (c in Figure 1) | 11-15 |
| Fourth annular straight section | 9-11 (d in Figure 1) | 49-52 |
| Fifth annular straight section | 86-88 (e in Figure 1) | 5-8 |

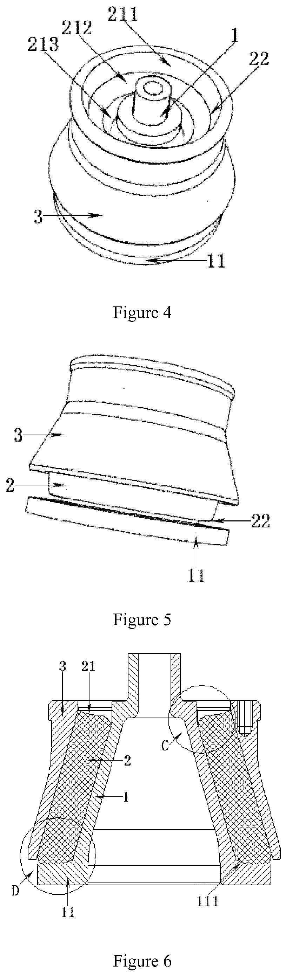

As shown in Figure 1 and Figure 2, when the conical spring is subjected to the downward pressure of the vertical load, the rubber body 2 downwards moves, and the shape of the upper end of the rubber body 2 may change. Because the slope and length of each of the first annular straight section 211, the second annular straight section 212 and the third annular straight section 213 and the fillet radius of the annular fillet section 22 are designed reasonably, in the process in downwards moving the rubber body 2, the shape of the upper end of the rubber body 2 may be always kept as a smooth shape. The upper end of the rubber body 2 may be prevented from folding, so that the upper end of the rubber body may be prevented from cracking. When the conical spring is subjected to the downward pressure of the maximum vertical load, the shape of the upper end of the rubber body 2 may present a smooth shape as shown at C in Figure 6.

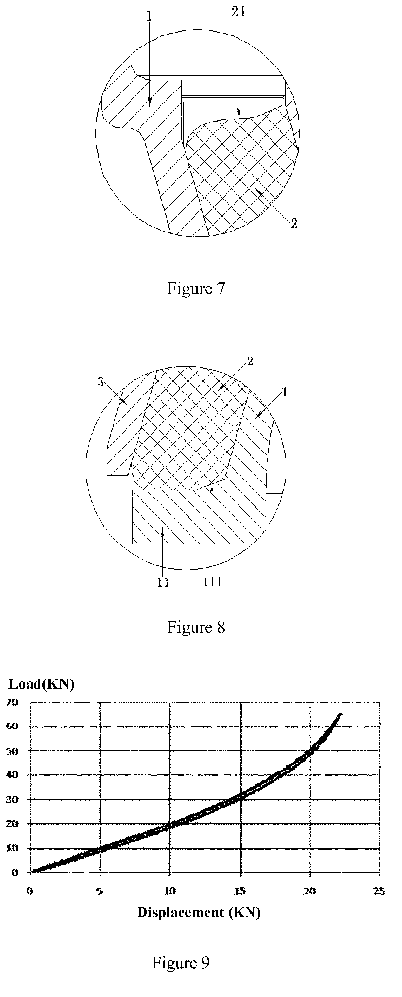

As shown in Figure 1, Figure 3 and Figure 5, the lower end of the inner conical body 1 extends to the outer side to form an annular inner conical body lug boss 11, the lower end of the rubber body 2 is located above the inner conical body lug boss 11, a fourth annular straight section 214 and a fifth annular straight section 215 are provided at the lower end of the rubber body 2, and the fourth annular straight section 214 and the fifth annular straight section 215 adopt the annular fillet section 22 for transition. When the conical spring is subjected to the downward pressure of the vertical load, the lower end of the rubber body 2 downwards moves and changes in shape, but the change in shape of the lower end of the rubber body 2 is restricted by both the inner side of the outer conical body 3 and the inner conical body lug boss 11. Therefore, the lower end of the rubber body 2 may be fitted with the inner conical body lug boss 11 and the inner side of the outer conical body 3, the inner conical body lug boss 11 and the lug boss transition edge 111 adopt a gentle straight line edge for transition, so that a smooth shape may be formed when the lower end of the rubber body 2 is fitted with the inner conical body lug boss 11 and the inner side of the outer conical body 3. The lower end of the rubber body 2 may be prevented from folding, so that the lower end of the rubber body 2 may be prevented from cracking. When the conical spring is subjected to the downward pressure of the maximum vertical load, the shape of the lower end of the rubber body 2 may present a smooth shape as shown at D in Figure 6, also see that shown in Figure 8.

As shown in Figure 1 and Figure 2, because the first annular straight section 211 and the second annular straight section 212 of the rubber body 2 adopt the annular fillet section 22 for transition, and the second annular straight section 212 and the third annular straight section 213 also adopt the annular fillet section 22 for transition, when the conical spring is subjected to the downward pressure of the vertical load to make the upper end of the rubber body 2 downwards move, the shape of the upper end surface 21 of the rubber body 2 is always changed from the annular fillet section 22, thus, the positions of vertical changeable stiffness, transverse changeable stiffness and longitudinal changeable stiffness of the conical spring may be adjusted by changing the length of the annular straight section 21; the number of times of changing vertical stiffness, transverse stiffness and longitudinal stiffness may be increased by increasing the number of the annular straight sections 21; and the vertical changeable stiffness, transverse changeable stiffness and longitudinal changeable stiffness of the conical spring may be adjusted by changing the slope of the annular straight section 21.

Because the requirements of the locomotive for the stiffness of the conical spring are different in different conditions, when the locomotive is under no load, it is required that the conical spring should not have too large stiffness but should have good elasticity, so that good elasticity refers that a good effect of shock absorption may be achieved since the stiffness of conical spring may be not suddenly increased even if the pressure of the load of the locomotive on the conical spring is suddenly increased. However, after the locomotive is under load, especially under the maximum load, it is required that the conical spring should have large stiffness and should have good elasticity, which requires that the conical spring should have good changeable stiffness to meet the stiffness requirements of the locomotive in various cases.

As shown in Figure 10, because of having no structures of annular straight sections and annular fillet sections 22, the conical spring at present cannot achieve multiple changes of stiffness. The vertical stiffness curves of the conical spring at present are as shown in Figure 12, and there are two vertical stiffness curves in the Figure, wherein the curve located on the upper part is a vertical stiffness curve when the locomotive is loaded, and the curve located on the lower part is a vertical stiffness curve when the locomotive is unloaded. At present, under no load, according to different models of locomotives, each conical spring is subjected to a vertical load of about 14KN-18KN, it can be seen from Figure 12 that 14KN-18KN is at the inverse S curve of the vertical stiffness of the conical spring. The inverse S curve has the characteristic that the distance of downward movement of the rubber body 2 is not large, but the stiffness thereof is increased quickly, and such stiffness increase mode is not beneficial to the shock absorption of the locomotive, which may cause the risk of derail of the locomotive.

As shown in Figure 1, Figure 2 and Figure 4, in this embodiment, three annular straight sections 21 and two annular fillet sections 22 of the upper end of rubber body 2 enable the conical spring to achieve two vertical, transverse and longitudinal stiffness changes. The vertical stiffness curves of the conical spring in this embodiment are as shown in Figure 9, and there are two vertical stiffness curves in the Figure, wherein the curve located on the upper part is a vertical stiffness curve when the locomotive is loaded, and the curve located on the lower part is a vertical stiffness curve when the locomotive is unloaded. Because of the structure of two vertical stiffness changes in this embodiment, when the conical spring is subjected to the downward pressure of the vertical load suddenly increased, the distance of downward movement of the rubber body 2 is also large, thereby achieving good effects of buffering and shock absorption. It can be seen from Figure 9 that the inverse S curve of the vertical stiffness of the conical spring is already eliminated in this embodiment. Similarly, when the locomotive accelerates, decelerates or makes a turn, because of the structure of the three annular straight sections 21 and two annular fillet sections 22 of the upper end of the rubber body 2, the conical spring has two stiffness changes in the transverse direction and the longitudinal direction, and achieves good effects of buffering and shock absorption in the transverse direction and the longitudinal direction. Thus, the locomotive is more steady and smooth while the locomotive accelerates, decelerates or makes a turn, thereby increasing the comfortableness of passengers in the locomotive.

As shown in Figure 6, Figure 7 and Figure 8, when the conical spring bears the maximum vertical load, the change in shape when the lower end of the rubber body 2 downwards moves may be restricted by the inner side of the outer conical body 3 and the inner conical body lug boss 11, so that the lower end of the rubber body 2 enables the stiffness of the conical spring to be substantially increased. When the conical spring bears the maximum vertical load, the change in shape of the upper end of the rubber body 2 may also be restricted by the inner side of the outer conical body 3 and the shape of the lower end of the rubber body 2, so that the upper end of the rubber body 2 may bear the maximum vertical load, and a smooth shape is formed under the maximum vertical load. Just because the conical spring still can bear the load using the rubber body 2 under the maximum vertical load, the conical spring still can have good effects of buffering, shock absorption and noise reduction under the maximum vertical load.

It can be seen in this embodiment that for the five annular straight sections 21 and three annular fillet sections 22 of the upper end surface of the rubber body 2 of the conical spring and the lower end surface of the rubber body 2, three stiffness changes are formed. Moreover, the changeable stiffness of the conical spring may be changed by changing the length or slope of any one of the five annular straight sections 21 during manufacture, that is to say, the changeable stiffness of the conical spring may be changed by adjusting the length or slope of the annular straight section. When the vertical load is not large, for the conical spring, because of the above-mentioned three stiffness changes, the conical spring may have good effects of buffering and shock absorption; when the vertical load is large and even reaches the maximum vertical load, as shown in Figure 6, both the upper end of the rubber body 2 of the conical spring and the lower end of the rubber body 2 are in a smooth shape without stiffness change. Therefore, it can be seen from Figure 9 that the stiffness change thereof is not as gentle as that under small load. However, because under the maximum vertical load, the conical spring can still bear load using the rubber body 2, the conical spring can still have good effects of buffering, shock absorption and noise reduction at this moment. The design of the five annular straight sections 21 and three annular fillet sections 22 in this embodiment enables the shapes of both the upper end and the lower end of the rubber body 2 to have no fold in the process that the conical spring bears no load to bears the maximum vertical load, thereby preventing the rubber body 2 from cracking.

### Embodiment 2

As approximately the same as the structure in embodiment 1, the upper end surface of the upper rubber body 2 and the lower end surface of the rubber body 2, and the lug boss transition edge 111 adopt gentle curve edge for transition rather than non-gentle straight line edge for transition. The upper end of the rubber body 2 is divided into four annular straight sections 21 and three annular fillet sections 22, while the lower end of the rubber body 2 is divided into three annular straight sections 21 and two annular fillet sections 22. In this way, the number of times of stiffness changes of the conical spring may be changed by changing the number of annular straight sections 21, that is to say, the number of times of stiffness changes of the conical spring may be changed by adjusting the number of annular straight sections 21. Increasing or reducing the number of annular straight sections 21 still enables the shapes of both the upper end and the lower end of the rubber body 2 to have no fold in the process that the conical spring bears no load to bears the maximum vertical load and to be kept as smooth shapes always.

It can be seen through the above-mentioned embodiment that the invention relates to a method for changing stiffness and preventing folds and cracks of a conical spring. The conical spring comprises an inner conical body, a rubber body and an outer conical body. The rubber body encircles the periphery of the inner conical body. The outer conical body encircles the periphery of the rubber body. The rubber body, the inner conical body and the outer conical body form a conical rubber metal spring together. The method of the invention has the characteristic that an upper rubber profile of the rubber body and a lower rubber profile of the rubber body of the conical spring adopt a multi-segment structural form, wherein the upper rubber profile of the rubber body is of a multi-section downslope structure, and the lower rubber profile of the rubber body is of a multi-section upslope structure; for the conical spring, the extent of stiffness change and the position of stiffness change of the conical spring are adjusted by adjusting the shape, slope and length of each section in the multi-section downslope structure of the upper rubber profile of the rubber body and the multi-section upslope structure of the lower rubber profile of the rubber body, and the adjustment of multiple stiffness changes is achieved by controlling the number of multiple sections.

Further, in the multi-section downslope structure of the upper rubber profile of the rubber body, the shape of each section is a straight line or arc shape, every two sections are connected through an arc section transition, to guarantee that in the process of downwards moving the upper end of the rubber body, the shape of the upper end of the rubber body is always kept as a smooth shape, so that no fold and crack may be generated.

Further, in the multi-section upslope structure of the lower rubber profile of the rubber body, the shape of each section is a straight line or arc shape, every two sections are connected through arc section transition, to guarantee that in the process of downwards moving the rubber body, the shape of the lower end surface of the rubber body is always kept as a smooth shape, so that no fold and crack may be generated.

Further, a lug boss is externally protruded from the bottom of the inner conical body, and after the rubber body downwards moves to the lower end surface of the rubber body and comes into contact with the lug boss, substantial changeable stiffness is generated by the cooperation of double restriction of the lug boss externally protruded from the bottom of the inner conical body and the inner side of the outer conical body; under the action of vertical load, the lower end surface of the rubber body is simultaneously closely fitted with the inner side of the outer conical body and the externally protruded lug boss of the lower part of the inner conical body gradually in a rolling mode, to achieve substantial changeable stiffness.

Further, the upper surface of the lug boss is of a multi-section structure, every two sections adopt an arc section for transition, the extent of stiffness change and the position of stiffness change are adjusted by adjusting the shape, slope and length of each section of the lug boss and the opening angle of the inner side of the outer conical body, and the adjustment multiple of stiffness changes is achieved by controlling the number of multiple sections.

Obviously, several simple improvements or modifications may be made without departing from the principle of the invention, all of which shall be considered to belong to the protection scope of the invention, as defined in the appended claims.

## Claims

1. A method for changing stiffness and preventing folding and cracking of a conical spring,
wherein the conical spring comprises an inner conical body (1), a rubber body (2) and an outer conical body (3), wherein the rubber body (2) encircles the periphery of the inner conical body (1), the outer conical body (3) encircles the periphery of the rubber body (2), the rubber body (2), the inner conical body (1) and the outer conical body (3) form a conical rubber metal spring together,
wherein an upper rubber profile of the rubber body and a lower rubber profile of the rubber body (2) of the conical spring adopt a multi-segment structural form, wherein the upper rubber profile of the rubber body is of a multi-section downslope structure, and the lower rubber profile of the rubber body (2) is of a multi-section upslope structure; for the conical spring, the extent of stiffness change and the position of stiffness change of the conical spring are adjusted by adjusting the shape, slope and length of each section in the multi-section downslope structure of the upper rubber profile of the rubber body (2) and the multi-section upslope structure of the lower rubber profile of the rubber body, and the adjustment of multiple stiffness changes is achieved by controlling the number of multiple sections,
wherein the inner conical body (1) extends to the outer side to form an annular inner conical body lug boss (11) such that when rubber body (2) moves downwards under large vertical load, at this moment the lower end of the rubber body (2) is fitted with the inner conical body lug boss (11),
the method being **characterized in that** the upper surface of the lug boss (11) is of a multi-section structure, every two sections adopt an arc section for transition, the extent of stiffness change and the position of stiffness change are adjusted by adjusting the shape, slope and length of each section of the lug boss (11) and the opening angle of the inner side of the outer conical body (3), and the adjustment of multiple stiffness changes is achieved by controlling the number of multiple sections.

2. The method for changing stiffness and preventing folding and cracking of a conical spring according to claim 1, **characterized in that** in the multi-section downslope structure of the upper rubber profile of the rubber body (2), the shape of each section is a straight line or arc shape, and every two sections are connected through arc section transition, to guarantee that in the process of downwards moving the upper end of the rubber body, the shape of the upper end of the rubber body (2) is always kept as a smooth shape, so that no fold and crack may be generated.

3. The method for changing stiffness and preventing folds and cracks of a conical spring according to claim 1, **characterized in that** in the multi-section upslope structure of the lower rubber profile of the rubber body (2), the shape of each section is a straight line or arc shape, every two sections are connected through arc section transition, to guarantee that in the process of downwards moving the rubber body (2), the shape of the lower end surface of the rubber body (2) is always kept as a smooth shape, so that no fold and crack may be generated.

4. The method for changing stiffness and preventing folds and cracks of a conical spring according to claim 2 or 3, **characterized in that** the lug boss (11) is externally protruded from the bottom of the inner conical body (1), and after the rubber body (2) downwards moves to the lower end surface of the rubber body (2) and comes into contact with the lug boss (11), substantial changeable stiffness is generated by the cooperation of double restriction of the lug boss (11) externally protruded from the bottom of the inner conical body (11) and the inner side of the outer conical body (3); under the action of vertical load, the lower end surface of the rubber body is simultaneously closely fitted with the inner side of the outer conical body (3) and the externally protruded lug boss (11) of the lower part of the inner conical body (11) gradually in a rolling mode, to achieve substantial changeable stiffness.

5. A conical spring for carrying out the above method for changing stiffness and preventing folding and cracking of the conical spring according to claim 1, which comprises an inner conical body (1), a rubber body (2) and an outer conical body (3), wherein the rubber body (2) encircles the periphery of the inner conical body (1), the outer conical body (3) encircles the periphery of the rubber body (2), the rubber body (2), the inner conical body (1) and the outer conical body (3) form a conical rubber metal spring together; and wherein an upper rubber profile of the rubber body (2) of the conical spring and a lower rubber profile of the rubber body (2) adopt a multi-section structure form, wherein the upper rubber profile of the rubber body (2) is of a multi-section downslope structure form, and the lower rubber profile of the rubber body (2) is of a multi-section upslope structure, wherein the inner conical body (1) extends to the outer side to form an annular inner conical body lug boss (11), said lug boss (11) adapted such that when rubber body (2) moves downwards under large vertical load, at this moment the lower end of the rubber body (2) is fitted with the inner conical body lug boss (11), **characterized in that** the upper surface of the lug boss (11) is of a multi-section structure, every two sections adopt an arc section for transition, and the extent of stiffness change and the position of stiffness change are adjusted by adjusting the shape, slope and length of each section of the lug boss (11) and the opening angle of the inner side of the outer conical body (3); and the adjustment of multiple stiffness changes is achieved by controlling the number of multiple sections.

6. The conical spring according to claim 5, **characterized in that** in the multi-section downslope structure of the upper rubber profile of the rubber body (2), the shape of each section is a straight line or arc shape, every two sections adopt an arc section for transition, to guarantee that in the process of downwards moving the upper end of the rubber body (2), the shape of the upper end of the rubber body (2) is always kept as a smooth shape, so that no fold and crack may be generated.

7. The conical spring according to claim 6, **characterized in that** the cross-section of the multi-section downslope structure is combined by two straight lines or more, and every two straight lines adopt an arc for transition, each line is different in slope and length, to guarantee that in the process of downwards moving the upper end of the rubber body (2), the shape of the upper end of the rubber body (2) is always kept as a smooth shape, so that no fold and crack may be generated.

8. The conical spring according to claim 6, **characterized in that** the cross-section of the multi-section downslope structure is combined by three straight lines, the first line is 18-22 mm, the angle between the first line and the axis is 14-17 degree; the second line is 44-47 mm, the angle between the second line and the axis is 20-23 degree; the third line is 14-16 mm, the angle between the third line and the axis is 11-15 degree.

9. The conical spring according to claim 5, **characterized in that** in the multi-section upslope structure of the lower rubber profile of the rubber body (2), the shape of each section is a straight line or arc shape, every two sections adopt an arc section for transition, to guarantee that in the process of downwards moving the rubber body, the shape of the lower end surface of the rubber body (2) is always kept as a smooth shape, so that no fold and crack may be generated.

10. The conical spring according to claim 9, **characterized in that** the cross-section of the multi-section upslope structure is combined by two straight lines, the first line is 49-52 mm, the angle between the first line and the axis is 9-11 degree; the second line is 5-8 mm, the angle between the second line and axis is 86-88 degree.

11. The conical spring according to claim 8 or 10, **characterized in that** the lug boss (11) is externally protruded from the bottom of the inner conical body (1), after the rubber body (2) downwards moves to the lower end surface of the rubber body (2) and comes into contact with the lug boss (11), substantial changeable stiffness is generated by the cooperation of double restriction of the lug boss (11) externally protruded from the bottom of the inner conical body (1) and the inner side of the outer conical body (3); under the action of vertical load, the lower end surface of the rubber body (2) is simultaneously closely fitted with the inner side of the outer conical body (3) and the externally protruded lug boss (11) of the lower part of the inner conical body (1) gradually in a rolling mode, to achieve substantial changeable stiffness.

## Patentansprüche

1. Verfahren zum Ändern der Steifigkeit und zum Vermeiden von Falten und Rissen in einer konischen Feder
wobei die konische Feder einen inneren konischen Körper (1), einen Gummikörper (2) und einen äußeren konischen Körper (3) aufweist, wobei der Gummikörper (2) den Umfang des inneren konischen Körpers (1) umgibt, der äußere konische Körper (3) den Umfang des Gummikörpers (2) umgibt, der Gummikörper (2), der innere konische Körper (1) und der äußere konische Körper (3) zusammen eine konische Gummimetallfeder bilden,
wobei ein oberes Gummiprofil des Gummikörpers und ein unteres Gummiprofil des Gummikörpers (2) der konischen Feder eine mehrteilige Strukturform annehmen, wobei das obere Gummiprofil des Gummikörpers eine mehrteilige abfallende Struktur aufweist und das untere Gummiprofil des Gummikörpers (2) eine mehrteilige ansteigende Struktur aufweist, bei der konischen Feder das Ausmaß der Steifigkeitsänderung und die Position der Steifigkeitsänderung der konischen Feder durch Einstellen der Form, der Neigung und der Länge jedes Abschnitts in der mehrteiligen abfallenden Struktur des oberen Gummiprofils des Gummikörpers (2) und der mehrteiligen ansteigenden Struktur des unteren Gummiprofils des Gummikörpers eingestellt werden, und die Einstellung von mehrfachen Steifigkeitsänderungen durch Steuern der Anzahl von mehreren Abschnitten erreicht wird,
wobei sich der innere konische Körper (1) zur Außenseite hin erstreckt, um einen ringförmigen inneren Flanschvorsprung (11) zu bilden, so dass, wenn sich der Gummikörper (2) unter großer vertikaler Last nach unten bewegt, in diesem Moment das untere Ende des Gummikörpers (2) mit dem inneren konischen Flanschvorsprung (11) angepasst wird,
wobei das Verfahren **dadurch gekennzeichnet ist, dass** die obere Fläche des Flanschvorsprungs (11) eine mehrteilige Struktur aufweist, dass alle zwei Abschnitte einen Bogenabschnitt für den Übergang annehmen, dass das Ausmaß der Steifigkeitsänderung und die Position der Steifigkeitsänderung durch Einstellen der Form, der Neigung und der Länge jedes Abschnitts des Flanschvorsprungs (11) und des Öffnungswinkels der Innenseite des äußeren konischen Körpers (3) eingestellt werden, und dass die Einstellung von mehrfachen Steifigkeitsänderungen durch Steuern der Anzahl von mehreren Abschnitten erreicht wird.

2. Verfahren zum Ändern der Steifigkeit und zum Vermeiden von Falten und Rissen einer konischen Feder nach Anspruch 1, **dadurch gekennzeichnet, dass** in der mehrteiligen abfallenden Struktur des oberen Gummiprofils des Gummikörpers (2) die Form jedes Abschnitts eine gerade Linie oder eine Bogenform ist, und dass alle zwei Abschnitte durch einen Bogenabschnittsübergang verbunden sind, um zu gewährleisten, dass in der Abwärtsbewegung des oberen Endes des Gummikörpers die Form des oberen Endes des Gummikörpers (2) immer als eine glatte Form beibehalten wird, so dass keine Falten und Risse erzeugt werden können.

3. Verfahren zum Ändern der Steifigkeit und zum Vermeiden von Falten und Rissen einer konischen Feder nach Anspruch 1, **dadurch gekennzeichnet, dass** in der mehrteiligen ansteigenden Struktur des unteren Gummiprofils des Gummikörpers (2) die Form jedes Abschnitts eine gerade Linie oder eine Bogenform ist, wobei alle zwei Abschnitte durch einen Bogenabschnittsübergang verbunden sind, um zu gewährleisten, dass in dem Prozess der Abwärtsbewegung des Gummikörpers (2) die Form der unteren Endfläche des Gummikörpers (2) immer als eine glatte Form gehalten wird, so dass keine Falten und Risse erzeugt werden können.

4. Verfahren zum Ändern der Steifigkeit und zum Vermeiden von Falten und Rissen einer konischen Feder nach Anspruch 2 oder 3, **dadurch gekennzeichnet, dass** der Flanschvorsprung (11) von der Unterseite des inneren konischen Körpers (1) nach außen vorsteht und sich nach dem Abwärtsbewegen des Gummikörpers (2) zur unteren Endfläche des Gummikörpers (2) bewegt und in Kontakt mit dem Flanschvorsprung (11) kommt, durch das Zusammenwirken der doppelten Verengung des Flanschvorsprungs (11), der von der Unterseite des inneren konischen Körpers (11) nach außen ragt, und der Innenseite des äußeren konischen Körpers (3) eine erhebliche veränderliche Steifigkeit erzeugt wird; unter der Einwirkung einer vertikalen Last wird die untere Endfläche des Gummikörpers gleichzeitig eng an die Innenseite des äußeren konischen Körpers (3) und den nach außen vorstehenden Flanschvorsprung (11) des unteren Teils des inneren konischen Körpers (11) allmählich in einem Rollmodus angepasst, um eine beträchtliche veränderliche Steifigkeit zu erreichen.

5. Konusfeder zur Durchführung des obigen Verfahrens zum Ändern der Steifigkeit und zum Vermeiden von Falten und Rissen der Konusfeder nach Anspruch 1, die einen inneren konischen Körper (1), einen Gummikörper (2) und einen äußeren konischen Körper (3) aufweist, wobei der Gummikörper (2) den Umfang des inneren konischen Körpers (1) umgibt, der äußere konische Körper (3) den Umfang des Gummikörpers (2) umgibt, der Gummikörper (2), der innere konische Körper (1) und der äußere konische Körper (3) zusammen eine konische Gummimetallfeder bilden; und wobei ein oberes Gummiprofil des Gummikörpers (2) der konischen Feder und ein unteres Gummiprofil des Gummikörpers (2) eine mehrteilige Strukturform annehmen, wobei das obere Gummiprofil des Gummikörpers (2) eine mehrteilige abfallende Strukturform aufweist und das untere Gummiprofil des Gummikörpers (2) eine mehrteilige ansteigende Struktur aufweist, wobei sich der innere konische Körper (1) zur Außenseite hin erstreckt, um eine ringförmige innere konischen Flanschvorsprung (11) zu bilden, wobei die Flanschvorsprung (11) so angepasst ist, dass, wenn sich der Gummikörper (2) unter einer großen vertikalen Last nach unten bewegt, in diesem Moment das untere Ende des Gummikörpers (2) mit dem inneren konischen Flanschvorsprung (11) angepasst wird, **dadurch gekennzeichnet, dass** die obere Fläche des Flanschvorsprungs (11) eine mehrteilige Struktur aufweist, wobei alle zwei Abschnitte einen Bogenabschnitt für den Übergang annehmen und das Ausmaß der Steifigkeitsänderung und die Position der Steifigkeitsänderung durch Einstellen der Form, der Neigung und der Länge jedes Abschnitts des Flanschvorsprungs (11) und des Öffnungswinkels der Innenseite des äußeren konischen Körpers (3) eingestellt werden, und die Einstellung von mehrfachen Steifigkeitsänderungen durch Steuern der Anzahl von mehreren Abschnitten erreicht wird.

6. Konusfeder nach Anspruch 5, **dadurch gekennzeichnet, dass** in der mehrteiligen abfallenden Struktur des oberen Gummiprofils des Gummikörpers (2) die Form jedes Abschnitts eine gerade Linie oder eine Bogenform ist, wobei alle zwei Abschnitte einen Bogenabschnitt für den Übergang annehmen, um zu gewährleisten, dass in dem Prozess der Abwärtsbewegung des oberen Endes des Gummikörpers (2) die Form des oberen Endes des Gummikörpers (2) immer als eine glatte Form beibehalten wird, so dass keine Falten und Risse erzeugt werden können.

7. Konusfeder nach Anspruch 6, **dadurch gekennzeichnet, dass** der Querschnitt der mehrteiligen abfallenden Struktur durch zwei oder mehr gerade Linien verbunden ist und jede der beiden geraden Linien einen Bogen für den Übergang annimmt, wobei jede Linie eine unterschiedliche Neigung und Länge hat, um zu gewährleisten, dass bei der Abwärtsbewegung des oberen Endes des Gummikörpers (2) die Form des oberen Endes des Gummikörpers (2) immer als eine glatte Form beibehalten wird, so dass keine Faltung und kein Riss erzeugt werden können.

8. Konusfeder nach Anspruch 6, **dadurch gekennzeichnet, dass** der Querschnitt der mehrteiligen abfallenden Struktur durch drei gerade Linien kombiniert ist, wobei die erste Linie 18-22 mm lang ist und der Winkel zwischen der ersten Linie und der Achse 14-17 Grad beträgt; die zweite Linie 44-47 mm lang ist und der Winkel zwischen der zweiten Linie und der Achse 20-23 Grad beträgt; die dritte Linie 14-16 mm lang ist und der Winkel zwischen der dritten Linie und der Achse 11-15 Grad beträgt.

9. Konusfeder nach Anspruch 5, **dadurch gekennzeichnet, dass** in der mehrteiligen ansteigenden Struktur des unteren Gummiprofils des Gummikörpers (2) die Form jedes Abschnitts eine gerade Linie oder eine Bogenform ist, wobei alle zwei Abschnitte einen Bogenabschnitt für den Übergang annehmen, um zu gewährleisten, dass in dem Prozess der Abwärtsbewegung des Gummikörpers die Form der unteren Endfläche des Gummikörpers (2) immer als eine glatte Form gehalten wird, so dass keine Falten und Risse erzeugt werden können.

10. Konusfeder nach Anspruch 9, **dadurch gekennzeichnet, dass** der Querschnitt der mehrteiligen Aufwärtsstruktur durch zwei gerade Linien verbunden ist, wobei die erste Linie 49-52 mm lang ist und der Winkel zwischen der ersten Linie und der Achse 9-11 Grad beträgt; die zweite Linie ist 5-8 mm lang und der Winkel zwischen der zweiten Linie und der Achse beträgt 86-88 Grad.

11. Konusfeder nach Anspruch 8 oder 10, **dadurch gekennzeichnet, dass** der Flanschvorsprung (11) vom Boden des inneren konischen Körpers (1) nach außen vorsteht, nachdem sich der Gummikörper (2) nach unten zur unteren Endfläche des Gummikörpers (2) bewegt und mit dem Flanschvorsprung (11) in Berührung kommt, durch das Zusammenwirken der doppelten Verengung des Flanschvorsprungs (11), der vom Boden des inneren konischen Körpers (1) nach außen vorsteht, und der Innenseite des äußeren konischen Körpers (3) eine wesentliche veränderliche Steifigkeit erzeugt wird; unter der Einwirkung einer vertikalen Last die untere Endfläche des Gummikörpers (2) gleichzeitig eng an die Innenseite des äußeren konischen Körpers (3) und den nach außen vorstehenden Flanschvorsprung (11) des unteren Teils des inneren konischen Körpers (1) allmählich in einem Rollmodus angepasst wird, um eine wesentliche veränderbare Steifigkeit zu erreichen.

## Revendications

1. Méthode pour modifier la rigidité et empêcher le pliage et la fissuration d'un ressort conique
dans lequel le ressort conique comprend un corps conique intérieur (1), un corps en caoutchouc (2) et un corps conique extérieur (3), dans lequel le corps en caoutchouc (2) entoure la périphérie du corps conique intérieur (1), le corps conique extérieur (3) entoure la périphérie du corps en caoutchouc (2), le corps en caoutchouc (2), le corps conique intérieur (1) et le corps conique extérieur (3) forment ensemble un ressort conique en caoutchouc métal,
dans lequel un profil en caoutchouc supérieur du corps en caoutchouc et un profil en caoutchouc inférieur du corps en caoutchouc (2) du ressort conique adoptent une forme structurelle multi-segments, dans laquelle le profil en caoutchouc supérieur du corps en caoutchouc présente une structure descendante multi-segments, et le profil en caoutchouc inférieur du corps en caoutchouc (2) présente une structure ascendante multi-segments ; pour le ressort conique, l'étendue du changement de rigidité et la position du changement de rigidité du ressort conique sont réglées en ajustant la forme, la pente et la longueur de chaque section dans la structure multisegment descendante du profil supérieur en caoutchouc du corps en caoutchouc (2) et la structure multisegment ascendante du profil inférieur en caoutchouc du corps en caoutchouc, et le réglage des changements de rigidité multiples est réalisé en contrôlant le nombre de sections multiples,
dans lequel le corps conique intérieur (1) s'étend vers le côté extérieur pour former un bossage annulaire de corps conique intérieur (11) de sorte que lorsque le corps en caoutchouc (2) se déplace vers le bas sous une charge verticale importante, à ce moment l'extrémité inférieure du corps en caoutchouc (2) est ajustée avec le bossage de corps conique intérieur (11),
ce procédé est **caractérisé en ce que** la surface supérieure du bossage (11) est d'une structure à plusieurs sections, toutes les deux sections adoptent une section en arc pour la transition, l'étendue du changement de rigidité et la position du changement de rigidité sont réglées en ajustant la forme, la pente et la longueur de chaque section du bossage (11) et l'angle d'ouverture du côté intérieur du corps conique extérieur (3), et l'ajustement des changements de rigidité multiples est réalisé en contrôlant le nombre de sections multiples.

2. Procédé pour modifier la rigidité et empêcher le pliage et la fissuration d'un ressort conique selon la revendication 1, **caractérisé en ce que** dans la structure descendante à plusieurs sections du profil supérieur en caoutchouc du corps en caoutchouc (2), la forme de chaque section est une ligne droite ou une forme d'arc, et toutes les deux sections sont reliées par une transition de section d'arc, pour garantir que dans le processus de déplacement vers le bas de l'extrémité supérieure du corps en caoutchouc, la forme de l'extrémité supérieure du corps en caoutchouc (2) est toujours maintenue comme une forme lisse, de sorte qu'aucun pliage et aucune fissure ne peuvent être générés.

3. Procédé de modification de la rigidité et de prévention des plis et des fissures d'un ressort conique selon la revendication 1, **caractérisé en ce que** dans la structure à plusieurs sections en pente ascendante du profil inférieur en caoutchouc du corps en caoutchouc (2), la forme de chaque section est une ligne droite ou une forme d'arc, toutes les deux sections sont reliées par une transition de section d'arc, pour garantir que dans le processus de déplacement vers le bas du corps en caoutchouc (2), la forme de la surface d'extrémité inférieure du corps en caoutchouc (2) est toujours maintenue comme une forme lisse, de sorte qu'aucun pli et aucune fissure ne peuvent être générés.

4. Procédé de modification de la rigidité et de prévention des plis et des fissures d'un ressort conique selon la revendication 2 ou 3, **caractérisé en ce que** le bossage (11) est extérieurement en saillie depuis le fond du corps conique intérieur (1), et après que le corps en caoutchouc (2) vers le bas se déplace vers la surface d'extrémité inférieure du corps en caoutchouc (2) et entre en contact avec le bossage (11), une rigidité variable substantielle est générée par la coopération de la double restriction du bossage (11) faisant saillie à l'extérieur du fond du corps conique intérieur (11) et du côté intérieur du corps conique extérieur (3) ; sous l'action d'une charge verticale, la surface d'extrémité inférieure du corps en caoutchouc est simultanément étroitement ajustée à la face intérieure du corps conique extérieur (3) et au bossage (11) de la partie inférieure du corps conique intérieur (11) , progressivement en mode de roulement, afin d'obtenir une rigidité variable substantielle.

5. Ressort conique pour la mise en œuvre du procédé ci-dessus de modification de la rigidité et de prévention du pliage et de la fissuration du ressort conique selon la revendication 1, qui comprend un corps conique intérieur (1), un corps en caoutchouc (2) et un corps conique extérieur (3), dans lequel le corps en caoutchouc (2) entoure la périphérie du corps conique intérieur (1), le corps conique extérieur (3) entoure la périphérie du corps en caoutchouc (2), le corps en caoutchouc (2), le corps conique intérieur (1) et le corps conique extérieur (3) forment ensemble un ressort métallique conique en caoutchouc ; et dans lequel un profil en caoutchouc supérieur du corps en caoutchouc (2) du ressort conique et un profil en caoutchouc inférieur du corps en caoutchouc (2) adoptent une forme de structure multi-section, dans laquelle le profil en caoutchouc supérieur du corps en caoutchouc (2) est d'une forme de structure multi-section descendante, et le profil en caoutchouc inférieur du corps en caoutchouc (2) est d'une structure multi-section ascendante, dans lequel le corps conique intérieur (1) s'étend vers le côté extérieur pour former un bossage annulaire de corps conique intérieur (11), ledit bossage (11) étant adapté de telle sorte que lorsque le corps en caoutchouc (2) se déplace vers le bas sous une charge verticale importante, à ce moment l'extrémité inférieure du corps en caoutchouc (2) est ajustée avec le bossage de corps conique intérieur (11),
**caractérisé en ce que** la surface supérieure du bossage (11) est d'une structure à plusieurs sections, toutes les deux sections adoptent une section en arc pour la transition, et l'étendue du changement de rigidité et la position du changement de rigidité sont réglées en ajustant la forme, la pente et la longueur de chaque section du bossage (11) et l'angle d'ouverture du côté intérieur du corps conique extérieur (3) ; et le réglage des changements de rigidité multiples est réalisé en contrôlant le nombre de sections multiples.

6. Ressort conique selon la revendication 5, **caractérisé en ce que** dans la structure descendante à plusieurs sections du profil supérieur en caoutchouc du corps en caoutchouc (2), la forme de chaque section est une ligne droite ou une forme d'arc, toutes les deux sections adoptent une section d'arc pour la transition, afin de garantir que dans le processus de déplacement vers le bas de l'extrémité supérieure du corps en caoutchouc (2), la forme de l'extrémité supérieure du corps en caoutchouc (2) est toujours maintenue comme une forme lisse, de sorte qu'aucun pli et aucune fissure ne peuvent être générés.

7. Ressort conique selon la revendication 6, **caractérisé en ce que** la section transversale de la structure multi-section descendante est combinée par deux lignes droites ou plus, et toutes les deux lignes droites adoptent un arc pour la transition, chaque ligne est différente en pente et en longueur, pour garantir que dans le processus de déplacement vers le bas de l'extrémité supérieure du corps en caoutchouc (2), la forme de l'extrémité supérieure du corps en caoutchouc (2) est toujours maintenue comme une forme lisse, de sorte qu'aucun pli et aucune fissure ne peuvent être générés.

8. Ressort conique selon la revendication 6, **caractérisé en ce que** la section transversale de la structure descendante multisections est combinée par trois lignes droites, la première ligne est de 18-22 mm, l'angle entre la première ligne et l'axe est de 14-17 degrés ; la deuxième ligne est de 44-47 mm, l'angle entre la deuxième ligne et l'axe est de 20-23 degrés ; la troisième ligne est de 14-16 mm, l'angle entre la troisième ligne et l'axe est de 11-15 degrés.

9. Ressort conique selon la revendication 5, **caractérisé en ce que** dans la structure à plusieurs sections en pente ascendante du profil inférieur en caoutchouc du corps en caoutchouc (2), la forme de chaque section est une ligne droite ou une forme d'arc, toutes les deux sections adoptent une section d'arc pour la transition, afin de garantir que dans le processus de déplacement vers le bas du corps en caoutchouc, la forme de la surface d'extrémité inférieure du corps en caoutchouc (2) est toujours maintenue comme une forme lisse, de sorte qu'aucun pli et aucune fissure ne peuvent être générés.

10. Ressort conique selon la revendication 9, **caractérisé en ce que** la section transversale de la structure ascendante multisections est combinée par deux lignes droites, la première ligne est de 49-52 mm, l'angle entre la première ligne et l'axe est de 9-11 degré ; la deuxième ligne est de 5-8 mm, l'angle entre la deuxième ligne et l'axe est de 86-88 degré.

11. Ressort conique selon la revendication 8 ou 10, **caractérisé en ce que** le bossage (11) est en saillie extérieure du fond du corps conique intérieur (1), après que le corps en caoutchouc (2) se déplace vers le bas sur la surface d'extrémité inférieure du corps en caoutchouc (2) et entre en contact avec le bossage (11), une rigidité variable substantielle est générée par la coopération de la double restriction du bossage (11) en saillie extérieure du fond du corps conique intérieur (1) et le côté intérieur du corps conique extérieur (3) ; sous l'action d'une charge verticale, la surface d'extrémité inférieure du corps en caoutchouc (2) est simultanément étroitement ajustée à la face intérieure du corps conique extérieur (3) et au bossage (11) de la partie inférieure du corps conique intérieur (1), progressivement en mode de roulement, afin d'obtenir une rigidité variable substantielle.
